# EUROPEAN PATENT SPECIFICATION

(11) **EP 2 859 266 B1**
(45) Date of publication and mention of the grant of the patent: **13.03.2019**
(21) Application number: 13727862.8
(22) Date of filing: 04.06.2013
(51) Int. Cl.: F16M 7/00

(54) **ADJUSTABLE CHOCK**
EINSTELLBARER KEIL
CALE RÉGLABLE

(30) Priority: 11.06.2012 WO PCT/EP2012/060991
(43) Date of publication of application: 15.04.2015
(73) Proprietor: SKF B.V, 3439 MT Nieuwegein (NL)
(72) Inventor: VOGELAAR, Dick, NL-3333 EE Zwijndrecht (NL); WESTERMAN, Marco, NL-2728 GN Zoetermeer (NL)
(74) Representative: Schonecke, Mitja
(86) International application number: PCT/EP2013/061493
(87) International publication number: WO 2013/186088

(56) References cited:
- EP-A1- 0 316 283
- WO-A2-2004/081377
- DE-A1- 2 203 381
- GB-A- 1 343 518

## Description

### FIELD OF THE INVENTION

The present invention relates to a height-adjustable chock for anchoring and levelling a heavy machine on a foundation.

### BACKGROUND TO THE INVENTION

An example of such a device is disclosed in EP 0316283. The device comprises an annular base element having an internal thread, which receives a centre element, part of which is provided with an external thread. The height of the device is therefore adjustable by screwing the centre element relative to the base element. The centre element has a concave top surface, which supports a washer with a convex bottom surface. In use of the device, part of a heavy machine rests on the washer, whereby angular misalignments are accommodated via the convex and concave mating surfaces of the device. Furthermore, the washer and the centre element comprise a through hole, so that when the device has been adjusted to the required height, the machine part can be bolted to the foundation.

A hydraulic actuator for supporting a load is disclosed in WO 2004/081377. The actuator includes a cylinder, a lower end closed by a base, and an annular side wall connected between the base and the upper wall. A piston is disposed partially within the cylinder, and includes a rod extending through the upper end of the cylinder, and a piston head that defines a hydraulic chamber with the base. A cylinder chamber is disposed between the base and the piston head and communicates with a fluid source and a fluid return to correspondingly extend and retract the piston. A support member is connected to the cylinder wall, and can be raised to support a tilt saddle member between the piston rod and the load after the piston has been extended.

There is still room for improvement.

### SUMMARY OF THE INVENTION

The present invention resides in an adjustable chock for levelling and anchoring a machine to a foundation. The chock comprises a base element, a centre element and a spherical washer, each of which is rotationally symmetric about a centre axis and has a centre through hole for receiving an anchor bolt, whereby the centre element is axially translational relative to the base element; the spherical washer comprises a surface which is one of concave or convex; the base element or the centre element comprises a mating surface for receiving the spherical washer, where the mating surface is the other of concave or convex. The chock further has a centre through hole for receiving an anchor bolt. According to the invention, the base element comprises an hydraulic connection point and a channel for a hydraulic fluid. The channel is in connection with a chamber enclosed between surfaces of the centre element and of the base element such that in use of the chock, filling the chamber with hydraulic fluid causes an axial translation of the centre element relative to the base element.

In a further development of the invention, the chock comprises a mechanical stop for limiting the axial translation of the centre element relative to the base element and for setting a maximum adjustment height of the chock.

A chock according to the invention therefore provides a safe and reliable means for the support, height adjustment and anchoring of a heavy machine part. Other advantages of the present invention will become evident from the detailed description and drawings.

### DESCRIPTION OF THE FIGURES

The invention will be described with reference to the attached drawings in which:
- Fig. 1a: shows a cross-sectional view of a first embodiment of a chock according to the invention, in a first position;
- Fig. 1b: shows a cross-sectional view of the chock of Fig. 1a, in a second position;
- Figs. 2-4: respectively show cross-sectional views of a second, a third and a fourth embodiment of a chock according to the invention.

### DEATILED DESCRIPTION

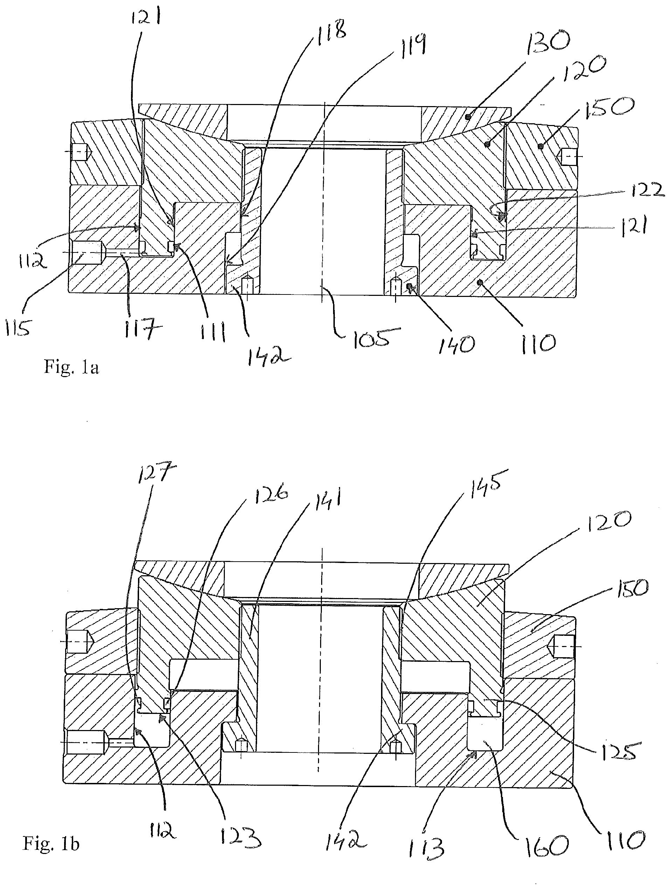

A first embodiment of the inventive chock is depicted in Figs. 1a and 1b. In Fig. 1a the chock is depicted at its lowest height level; in Fig. 1b, the chock is shown at a maximum height adjustment level. The chock is intended for use in combination with several other chocks for supporting and anchoring a heavy piece of machinery, such as a main propulsion engine on board a marine vessel. In such applications, it is vital the engine is as level as possible, to ensure proper alignment with the vessel's propeller shaft. Once level, the engine must then be firmly secured to a foundation.

The chock comprises a base element 110, a centre element 120 and a spherical washer 130, each of which has rotational symmetry with respect to a centre axis 105 of the chock. In this embodiment, the spherical washer 130 has a lower surface that is convex in shape, which rests on an upper mating surface of the centre element 120, which mating surface is concave in shape. The concave/convex mating surfaces accommodate up to approximately 4 degrees of angular difference between e.g. the engine bed and the foundation. To ensure that the mounting plane of the engine is perfectly level, each chock is preferably adjustable in height. The centre element 120 is therefore axially translational relative to the base element 110 along the axis 105.

In conventional chocks, the centre element has a threaded connection with the base element, and height is adjusted by screwing the centre element using a manual tool. Depending on the magnitude of the load which the chock must support, manual adjustment may be very difficult.

In a chock according to the invention, the centre element 120 is adjusted in height relative to the base element 110 via hydraulic means. The centre element is arranged on top of the base element, and fits into the base element. The centre element 120 and the base element 110 are shaped such that a first axial sliding interface is formed between a first cylindrical surface 111 of the base element and an overlapping first cylindrical surface 121 of the centre element. A second axial sliding interface is formed between a second cylindrical surface 112 of the base element and an overlapping second cylindrical surface 122 of the centre element. The first cylindrical surfaces 111, 121 of the first sliding interface have a smaller diameter than the second cylindrical surfaces 112, 122 of the second sliding interface. Consequently, the base element has a transitional surface 113 between its first and second sliding surfaces 111, 112, and the centre element 120 comprises a transitional surface 123 between its first and second cylindrical surfaces 121, 122. Suitably, a first seal (not shown) is provided between the first cylindrical surfaces 111, 121 of the base element 110 and of the centre element 120, and a second seal (not shown) is provided between the second cylindrical surfaces 112, 122 of the base element 110 and of the centre element 120. Thus, a sealed chamber 160 is defined between the transitional surface 113 of the base element, the transitional surface 123 of the centre element and the first and second sliding interfaces.

The base element 110 is further provided with a hydraulic connection point 115 at its outermost cylindrical surface. In addition, the base element has a channel 117 for hydraulic fluid, which channel is in connection with the chamber 160. Thus, when hydraulic fluid is pumped into the chamber 160, a pressure is exerted on the transitional surface 123 of the centre element, causing it to be raised, as shown in Fig. 1b.

In the depicted embodiment, the first and second cylindrical surfaces of the base element are respectively formed by an inner side wall 111 and an outer side wall 112 of an annular recess. Correspondingly, the first and second cylindrical surfaces of the centre element are formed by an inner side wall 121 and an outer side wall 122 of an annular protrusion 125 that fits into the annular recess. Suitably, the inner side wall of the protrusion 125 has a first groove 126 for receiving the first hydraulic seal (not shown). Similarly, the outer side wall of the protrusion 125 has a second groove 127 for receiving a second hydraulic seal (not shown).

To prevent the centre element from flying off, in the event that excessive hydraulic pressure is applied, the chock is provided with a mechanical height limiter. In this embodiment, the height limiter 140 is formed by a bushing, which is arranged within a bore of the centre element 120 and within a bore of the base element 110. The bushing has first section 141 and a second section 142, whereby the second section 142 has a larger external diameter than the first section. At an upper end of the first section 141, the height limiter is coupled to the bore of the centre element 120 by means of a threaded connection 145 or other suitable form of connection.

Thus, when hydraulic pressure builds up in the chamber 160, both the centre element 120 and the height limiter 140 move upwards relative to the base element 110. The bore of the base element 110 has an upper portion 118 and a lower portion 119. The upper portion has an internal diameter that matches the external diameter of the first section 141 of the height limiter, and the lower portion 119 has an internal diameter that matches the external diameter of the second section 142 of the height limiter 140. The maximum adjustment height of the chock 100 is therefore reached when the second section 142 of the height limiter 140 hits the upper portion 118 of the base element bore. Safety is thereby ensured.

When the centre element has been adjusted to the desired height, it can be secured at this height. In the depicted embodiment, the chock further comprises a locknut 150. Suitably, an outermost cylindrical surface of the centre element 120 is provided with an external thread that engages with an internal thread of the locknut. The locknut therefore moves with the centre element when hydraulic fluid is pumped into the chamber 160. Preferably, the external thread on the centre element extends along a greater axial distance than the internal thread of the nut. When the desired height has been reached, the locknut 150 can therefore be screwed downwards until a bottom surface of the locknut hits a top surface of the base element, as shown in Fig. 1b. The hydraulic pressure can then be removed, and the locknut 150 takes over the forces from the supported load.

Finally, an anchor bolt is inserted through a central opening in the spherical washer 130 and through a bore of the height limiter 140.

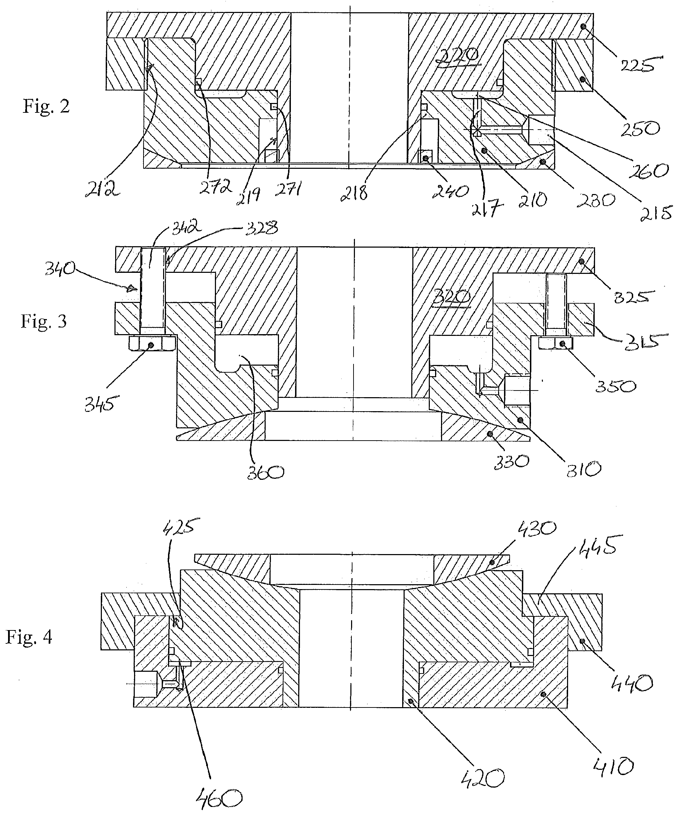

Several designs are possible within the scope of the current invention. For example, a second embodiment of an inventive chock is depicted in Fig. 2. The chock comprises a base element 210, a centre element 220 and a spherical washer 230. The spherical washer 230 has a concave upper surface in this embodiment, and the base element 210 rests on the washer and is provided with a convex mating surface. The centre element has a top plate 225 for supporting the load.

The chock again comprises a first axial sliding interface between opposing cylindrical surfaces of the base element 210 and the centre element 220. A first seal 171, such as an o-ring, is provided at the first interface. The chock further comprises a second axial sliding interface between opposing cylindrical surfaces of the base element 210 and the centre element 220. A second seal 172 is provided at the second interface. A chamber 260 for hydraulic fluid is thus defined by the first and second sliding interfaces and lower and upper surfaces of the centre element 230 and base element 210 respectively. The chamber 260 is connected to hydraulic connection point 215 on the outermost cylindrical surface of the base element via a channel 217.

In this embodiment, the bore of the centre element 220 extends over the full axial height of the chock, and serves as the opening for receiving the anchor bolt. At a lowermost portion of the centre element 220, a nut 240 is coupled to the centre element. The base element 210 again has a bore with a large diameter section 219 and a small diameter section 218, above the large-diameter section. The nut 240 therefore serves as the mechanical height limiter, which prevents the centre element 220 from being raised further when the nut 240 hits the small-diameter section 218 of the base element bore.

The chock of the second embodiment is also provided with a locknut for securing the chock at a desired height level. In this embodiment, an outermost cylindrical surface of the base element 210 is provided with an external thread 212, which engages the internal thread of the locknut 250. When the centre element 220 has been set to the desired height, by pumping hydraulic fluid into the chamber 260, the chock is secured at this height by screwing the locknut 250 upwards until it hits an underside of the top plate 225 of the centre element.

A third embodiment of a chock according to the invention is depicted in Fig. 3. As before, the chock comprises a chamber 360 enclosed by first and second axial sliding interfaces between opposing first and second cylindrical surfaces of the base element 310 and the centre element 320. The spherical washer 330 has a convex upper surface on which a concave mating surface of the base element is received. The centre element 320 has a top plate 325 for supporting the load.

In this embodiment, the adjustment height of the chock is limited by at least one first bolt 340 and the chock is secured at the desired height by at least one second bolt 350. The top plate comprises at least one threaded hole for receiving the at least one first bolt 340, such that an end of the bolt shank 342 is connected to the centre element 320. The base element 310 comprises a flange part 315, which comprises a though hole that is arranged axially opposite from the threaded hole 328 in the top plate 325 of the centre element. The bolt shank 342 of the first bolt 340 is inserted through the flange hole and can slide axially within this through hole, as the height of the centre element relative to the base element changes. A maximum height adjustment level is reached when the bolt head 345 hits an underside of the flange 315 of the base element, as depicted in Fig. 3. Preferably, the height limitation means comprises a plurality of first bolts 340.

For locking the centre element at the desired height level, the flange part 315 of the base element 310 comprises a threaded through hole for the at least one second bolt 350. Preferably, a plurality of second bolts and corresponding threaded through holes are provided. When the desired height level is reached, each second bolt is screwed upwards until a base of the bolt shank makes contact with an underside of the top plate 325. Thus, the plurality of second bolts 350 take over the forces from the supported load and the hydraulic pressure can be removed. The chock is then anchored to the foundation using an anchor bolt.

It is also possible to lock the centre element at the desired height hydraulically, by using a pressure greater than the pressure needed for height adjustment and which is sufficient to withstand the forces from the anchor bolt.

Fig. 4 shows an example of a fourth embodiment of a chock according to the invention, which is provided only with mechanical height limitation 440 and not with mechanical locking means. The height limiter is formed by a stop plate 440. The stop plate has a cylindrical inner surface, provided with an internal thread, which engages with an external thread on an outermost cylindrical surface of the base element 410. The stop plate has a flange part 415, perpendicular to the cylindrical surface of the stop plate, which overlap an axially oriented top surface 425 of the centre element 420. In the depicted embodiment, the stop plate is screwed upwards to a maximum permissible height, before hydraulic fluid is pumped into the chock's hydraulic fluid chamber. In a further example, the stop plate has a greater axial length, whereby an underside of the flange part 445 is arranged above the axially oriented top surface 425 of the centre element. It may then be unnecessary for further adjustment of the stop plate 440.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

## Claims

1. An adjustable chock for levelling and anchoring a machine to a foundation, the chock comprising a base element (110, 210, 310, 410), a centre element (120, 220, 320, 420) and a spherical washer (130, 230, 330, 430), each of which is rotationally symmetric about an axis (105), whereby the centre element is axially translational relative to the base element;
the spherical washer comprises a surface which is one of concave or convex; and
the base element or the centre element comprises a mating surface for receiving the spherical washer, the mating surface being the other of concave or convex;
the base element (110, 210, 310, 410) comprises an hydraulic connection point (115, 215) and a channel (117, 217) for a hydraulic fluid; and in that the channel is in connection with an enclosed chamber (160, 260, 360, 460) defined between surfaces of the centre element (120, 220, 320, 420) and the base element, such that in use of the chock, filling the chamber with hydraulic fluid causes an axial translation of the centre element relative to the base element, **characterized in that** the base element (110, 210, 310, 410), the centre element (120, 220, 320, 420) and the spherical washer (130, 230, 330, 430) each has a centre through hole for receiving an anchor bolt.

2. The adjustable chock of claim 1, wherein the axial translation of the centre element relative to the base element is limited by a mechanical height limiter (140, 240, 340, 440).

3. The adjustable chock of claim 1 or 2, wherein the chock further comprises locking means (150, 250, 350) for securing the centre element at a desired level.

4. The adjustable chock of claim 2, wherein:
the mechanical height limiter (140) is formed by a bushing arranged within a bore of the centre element (120) and within a bore of the base element (12), the bushing having a first section (141) and a second section (142) with a larger diameter than the first section (141);
the bore of the base element (110) has an upper portion (118) with an internal diameter that matches the external diameter of the second section (142) of the height limiter and a lower portion (119) with an internal diameter that matches the external diameter of the first section (141) of the height limiter; and
the bushing is coupled to the bore of the centre element (120) at an upper end of the first section (141), whereby maximum height adjustment of the chock is reached when the second section (142) of the height limiter hits the upper portion (118) of the base element bore.

5. The adjustable chock of claim 2, wherein the centre element (320) comprises a top plate (325) with at least one threaded hole (328), the base element (310) comprises a flange part (315) having a though hole arranged axially opposite from the at least one threaded hole (328) and the mechanical height limiter is formed by at least one first bolt (340) having a bolt shank (324) and a bolt head (345), whereby an end of the bolt shank is received in the threaded hole (328) so as to connect the first bolt (340) to the centre element (320) and the bolt shank is inserted through the hole in the flange part (315) and can slide axially within this through hole as the height of the centre element relative to the base element changes, such that a maximum height adjustment level is reached when the bolt head (345) hits an underside of the flange part (315).

## Patentansprüche

1. Einstellbarer Keil zum Nivellieren und Verankern einer Maschine auf einem Fundament, wobei der Keil ein Basiselement (110, 210, 310, 410), ein mittleres Element (120, 220, 320, 420) und eine sphärische Scheibe (130, 230, 330, 430) umfasst, wovon jede(s) um eine Achse (105) rotationssymmetrisch ist,
wobei
das mittlere Element in Bezug auf das Basiselement axial verschiebbar ist;
die sphärische Scheibe eine Fläche aufweist, die entweder konkav oder konvex ist; und
das Basiselement oder das mittlere Element eine Passfläche zum Aufnehmen der sphärischen Scheibe umfasst, wobei die Passfläche das andere aus konkav oder konvex ist;
das Basiselement (110, 210, 310, 410) einen Hydraulikanschlusspunkt (115, 215) und einen Kanal (117, 217) für ein Hydraulikfluid umfasst; und wobei der Kanal mit einer geschlossenen Kammer (160, 260, 360, 460), die zwischen Flächen des mittleren Elements (120, 220, 320, 420) und des Basiselements definiert ist, in Verbindung steht, sodass bei der Verwendung des Keils das Füllen der Kammer mit Hydraulikfluid eine axiale Verschiebung des mittleren Elements in Bezug auf das Basiselement bewirkt, **dadurch gekennzeichnet, dass** das Basiselement (110, 210, 310, 410), das mittlere Element (120, 220, 320, 420) und die sphärische Scheibe (130, 230, 330, 430) jede(s) ein mittleres Durchgangsloch zum Aufnehmen eines Ankerbolzens aufweisen.

2. Einstellbarer Keil nach Anspruch 1, wobei die axiale Verschiebung des mittleren Elements in Bezug auf das Basiselement durch einen mechanischen Höhenbegrenzer (140, 240, 340, 440) begrenzt ist.

3. Einstellbarer Keil nach Anspruch 1 oder 2, wobei der Keil ferner Arretierungsmittel (150, 250, 350) zum Sichern des mittleren Elements auf einem gewünschten Niveau umfasst.

4. Einstellbarer Keil nach Anspruch 2, wobei:
der mechanische Höhenbegrenzer (140) durch eine Buchse ausgebildet ist, die innerhalb einer Bohrung des mittleren Elements (120) und innerhalb einer Bohrung des Basiselements (12) angeordnet ist, wobei die Buchse einen ersten Abschnitt (141) und einen zweiten Abschnitt (142) mit einem größeren Durchmesser als der erste Abschnitt (141) aufweist;
wobei die Bohrung des Basiselements (110) einen oberen Teil (118) mit einem Innendurchmesser, der dem Außendurchmesser des zweiten Abschnitts (142) des Höhenbegrenzers entspricht, und einen unteren Teil (119) mit einem Innendurchmesser, der dem Außendurchmesser des ersten Abschnitts (141) des Höhenbegrenzers entspricht, aufweist und
wobei die Buchse mit der Bohrung des mittleren Elements (120) an einem oberen Ende des ersten Abschnitts (141) gekoppelt ist, wobei eine maximale Höheneinstellung des Keils erreicht ist, wenn der zweite Abschnitt (142) des Höhenbegrenzers an den oberen Teil (118) der Basiselementbohrung anschlägt.

5. Einstellbarer Keil nach Anspruch 2, wobei das mittlere Element (320) eine obere Platte (325) mit zumindest einem Gewindeloch (328) umfasst, das Basiselement (310) ein Flanschteil (315) umfasst, das ein Durchgangsloch aufweist, das axial gegenüber dem zumindest einen Gewindeloch (328) angeordnet ist, und der mechanische Höhenbegrenzer durch zumindest einen ersten Bolzen (340) ausgebildet ist, der einen Bolzenschaft (324) und einen Bolzenkopf (345) aufweist, wobei ein Ende des Bolzenschafts im Gewindeloch (328) aufgenommen ist, um den ersten Bolzen (340) mit dem mittleren Element (320) zu verbinden, und der Bolzenschaft durch das Loch im Flanschteil (315) eingeführt ist und axial innerhalb dieses Durchgangslochs gleiten kann, wenn sich die Höhe des mittleren Elements in Bezug auf das Basiselement ändert, sodass ein maximales Höheneinstellniveau erreicht ist, wenn der Bolzenkopf (345) an eine Unterseite des Flanschteils (315) anschlägt.

## Revendications

1. Cale réglable pour mettre à niveau et ancrer une machine à une fondation, la cale comprenant un élément de base (110, 210, 310, 410), un élément central (120, 220, 320, 420) et une rondelle sphérique (130, 230, 330, 430), dont chacun est rotativement symétrique autour d'un axe (105), dans laquelle
l'élément central est déplaçable axialement en translation par rapport à l'élément de base;
la rondelle sphérique présente une surface qui est une première surface parmi une surface concave ou une surface convexe; et
l'élément de base ou l'élément central présente une surface de contact destinée à recevoir la rondelle sphérique, la surface de contact étant l'autre surface parmi la surface concave ou la surface convexe;
l'élément de base (110, 210, 310, 410) comprend un point de connexion hydraulique (112, 215) et un canal (117, 217) pour un fluide hydraulique; et
le canal est en connexion avec une chambre fermée (160, 260, 360, 460) définie entre des surfaces de l'élément central (120, 220, 320, 420) et de l'élément de base, de telle sorte que, lors de l'utilisation de la cale, le remplissage de la chambre avec un fluide hydraulique entraîne une translation axiale de l'élément central par rapport à l'élément de base,
**caractérisée en ce que** l'élément de base (110, 210, 310, 410), l'élément central (120, 220, 320, 420) et la rondelle sphérique (130, 230, 330, 430) comportent chacun un trou traversant central destiné à recevoir un boulon d'ancrage.

2. Cale réglable selon la revendication 1, dans laquelle la translation axiale de l'élément central par rapport à l'élément de base est limitée par un limiteur de hauteur mécanique (140, 240, 340, 440).

3. Cale réglable selon la revendication 2, dans laquelle la cale comprend en outre des moyens de verrouillage (150, 250, 350) pour fixer l'élément central à un niveau souhaité.

4. Cale réglable selon la revendication 2, dans laquelle le limiteur de hauteur mécanique (140) est formé par une douille agencée à l'intérieur d'un alésage de l'élément central (120) et à l'intérieur d'un alésage de l'élément de base (12), la douille présentant une première section (141) et une seconde section (142) dont le diamètre est plus grand que celui de la première section (141);
l'alésage de l'élément de base (110) présente une partie supérieure (118) dont le diamètre interne correspond au diamètre externe de la seconde section (142) du limiteur de hauteur, et une partie inférieure (119) dont le diamètre interne correspond au diamètre externe de la première section (141) du limiteur de hauteur; et
la douille est couplée à l'alésage de l'élément central (120) à une extrémité supérieure de la première section (141), dans laquelle un réglage de hauteur maximum de la cale est atteint lorsque la seconde section (142) du limiteur de hauteur heurte la partie supérieure (118) de l'alésage de l'élément de base.

5. Cale réglable selon la revendication 2, dans laquelle l'élément central (320) comprend une plaque supérieure (325) comportant au moins un trou fileté (328), l'élément de base (310) comprend une partie de bride (315) comportant un trou traversant agencé axialement à l'opposé dudit dudit au moins un trou fileté (328), et le limiteur de hauteur mécanique est formé par au moins un premier boulon (340) présentant une tige de boulon (324) et une tête de boulon (345), dans laquelle une extrémité de la tige de boulon est reçue dans le trou fileté (328) de manière à connecter le premier boulon (340) à l'élément central (320), et la tige de boulon est insérée à travers le trou dans la partie de bride (315) et peut coulisser axialement à l'intérieur de ce trou traversant lorsque la hauteur de l'élément central par rapport à l'élément de base change, de telle sorte qu'un niveau de réglage de hauteur maximum soit atteint lorsque la tête de boulon (345) heurte un côté inférieur de la partie de bride (315) .
